# EUROPEAN PATENT APPLICATION

(11) **EP 4 790 170 A1**
(43) Date of publication of application: **12.08.2026**
(21) Application number: 24874593.7
(22) Date of filing: 01.10.2024
(51) Int. Cl.: C25B 15/023, C25B 1/04, C25B 9/00

(54) **METHOD FOR CONTROLLING WATER ELECTROLYSIS SYSTEM, AND WATER ELECTROLYSIS SYSTEM**

(30) Priority: 04.10.2023 JP 2023172474
(71) Applicant: Hitachi, Ltd., Tokyo 100-8280 (JP)
(72) Inventor: KAKUYA, Hiromu, Tokyo 100-8280 (JP); FURUTA, Futoshi, Tokyo 100-8280 (JP); WATANABE, Keiji, Tokyo 100-8280 (JP)
(74) Representative: MERH-IP Matias Erny Reichl Hoffmann Patentanwälte PartG mbB
(86) International application number: PCT/JP2024/035067
(87) International publication number: WO 2025/074991

(57) **Abstract**

A control device includes a step of determining a current command value to be applied to an electrolysis stack; and a step of determining a pure water adjustment amount command value for adjusting a pressure or/and a flow rate of water to be supplied to the electrolysis stack based on the current command value, and includes a step A of causing an actually measured value of the pressure or/and the flow rate to reach a second pure water adjustment amount command value (pure water adjustment amount command value w2) from a first pure water adjustment amount command value (pure water adjustment amount command value w1) before an actually measured value of a current applied from a power converter to the electrolysis stack reaches a second current command value (current command value c2) from a first current command value (current command value c1) when the current command value is changed from the first current command value to the second current command value that is a different value and the pure water adjustment amount command value is changed from the first pure water adjustment amount command value to the second pure water adjustment amount command value that is a different value.

## Description

### Technical Field

The present invention relates to a control method for a water electrolysis system, and to the water electrolysis system.

### Background Art

Hydrogen, unlike fossil fuels, is clean energy that does not emit carbon dioxide during combustion. Therefore, hydrogen has attracted attention as one of clean energy for realizing carbon neutrality, and technological development related to production, transportation, and utilization of hydrogen is in progress. In particular, since hydrogen can be produced at any place by electrolyzing water, a water electrolysis system capable of producing hydrogen by water electrolysis has attracted attention as means for reducing the amount of imported energy and improving an energy self-sufficiency rate, and large-scale introduction of such a water electrolysis system is planned mainly in Europe.

In a basic configuration of the water electrolysis system, an electrolyzer (electrolysis stack) responsible for water electrolysis is provided, a power supply (for example, a rectifier) for supplying direct current (DC) power to the electrolysis stack is connected, and the power supply is connected to a power system via a transformer. In addition, a device (defined as a pure water adjustment device in the present specification) for supplying pure water for electrolyzing water in the electrolysis stack and collecting not only hydrogen and oxygen generated in the electrolysis stack but also pure water that has not been used for electrolysis is installed. The pure water adjustment device includes a device that adjusts a pressure and a flow rate of the pure water supplied to the electrolysis stack. PTL 1 discloses an operation method of the pure water adjustment device of the water electrolysis system as described above.

PTL 1 discloses the operation method for the water electrolysis device in which power feeders are provided on both sides of an electrolyte membrane, a separator is stacked on the power feeder, a first flow path through which water is supplied is formed between the power feeder on one side and the separator on one side, and a second flow path through which hydrogen obtained by electrolysis of the water flows as high-pressure hydrogen whose pressure is higher than that of the first flow path is formed between the power feeder on the other side and the separator on the other side, the method operation including: a step of applying an electrolysis voltage to the water electrolysis device to perform water electrolysis processing; a step of detecting a fluctuation of the electrolysis voltage during the water electrolysis processing; and a step of adjusting a pressure of the water supplied to the first flow path according to the fluctuation of the electrolysis voltage.

### Citation List

### Patent Literature

PTL 1: JP 2010-180451 A

### Summary of Invention

### Technical Problem

In PTL 1, since the water pressure (pressure) is adjusted based on the fluctuation of the electrolysis voltage of the electrolysis stack, it is possible to appropriately adjust an electrolysis situation of the electrolysis stack. However, since there is a large difference between a response speed of a change in a current for adjusting a voltage of the electrolysis stack and a response speed of the pressure of the water, there is a possibility that the electrolysis situation of the electrolysis stack deviates from an appropriate situation in a transient state of adjustment of the pressure of the water according to the current. By experiencing such a transient state many times, deterioration of the electrolysis stack may progress and a frequency of replacing the electrolysis stack may increase.

The present invention has been made to solve the above-described problems, and an object of the present invention is to provide a control method for a water electrolysis system, and the water electrolysis system, which are capable of reducing a difference between a response speed of a current applied to an electrolysis stack and a response speed in a transient state of adjustment of water.

### Solution to Problem

In order to achieve the above object, a water electrolysis system according to the present invention is a control method for a water electrolysis system including a power converter that is configured to transmit and receive power between an alternating-current-side connection end and a direct-current-side connection end by converting an alternating current and a direct current, an electrolysis stack that electrolyzes water to generate hydrogen and oxygen, a pure water adjustment device that supplies water to the electrolysis stack and collects the hydrogen and the oxygen discharged from the electrolysis stack and the water that has not been used for electrolysis, and a control device that controls the power converter and the pure water adjustment device, the control method including: a step of determining, by the control device, a current command value to be applied to the electrolysis stack; a step of determining, based on the current command value, a pure water adjustment amount command value for adjusting a pressure or/and a flow rate of the water to be supplied to the electrolysis stack; and a step of transmitting the current command value and the pure water adjustment amount command value to the power converter and the pure water adjustment device, in which the control method includes a step A of causing an actually measured value of the pressure or/and the flow rate to reach a second pure water adjustment amount command value from a first pure water adjustment amount command value before an actually measured value of a current applied from the power converter to the electrolysis stack reaches a second current command value from a first current command value when changing the current command value from the first current command value to the second current command value that is a different value and changing the pure water adjustment amount command value from the first pure water adjustment amount command value to the second pure water adjustment amount command value that is a different value. Other aspects of the present invention will be described in the following embodiments.

### Advantageous Effects of Invention

According to the present invention, it is possible to reduce a response characteristic difference when adjusting the current of the electrolysis stack and the pressure or/and the flow rate of the water, and to bring the electrolysis state of the electrolysis stack into an appropriate state.

### Brief Description of Drawings

[FIG. 1] FIG. 1 is a diagram illustrating a device configuration of a water electrolysis system according to an embodiment of the present invention.
[FIG. 2] FIG. 2 is a diagram illustrating a device configuration of a pure water adjustment device according to the embodiment of the present invention.
[FIG. 3] FIG. 3 is a time chart illustrating operations of a current and a pure water adjustment amount in a first comparative example.
[FIG. 4] FIG. 4 is a time chart illustrating operations of a current and a pure water adjustment amount in a second comparative example.
[FIG. 5] FIG. 5 is a time chart illustrating a first operation example of a current and a pure water adjustment amount according to a first embodiment.
[FIG. 6] FIG. 6 is a flowchart illustrating operation processing of the first operation example of the current and the pure water adjustment amount according to the first embodiment.
[FIG. 7] FIG. 7 is a time chart illustrating a second operation example of a current and a pure water adjustment amount according to a second embodiment.
[FIG. 8] FIG. 8 is a flowchart illustrating operation processing of the second operation example of the current and the pure water adjustment amount according to the second embodiment.
[FIG. 9] FIG. 9 is a time chart illustrating a third operation example of a current and a pure water adjustment amount according to a third embodiment.
[FIG. 10] FIG. 10 is a flowchart illustrating operation processing of the third operation example of the current and the pure water adjustment amount according to the third embodiment.
[FIG. 11] FIG. 11 is a time chart illustrating a fourth operation example of a current and a pure water adjustment amount according to a fourth embodiment.
[FIG. 12] FIG. 12 is a flowchart illustrating operation processing of the fourth operation example of the current and the pure water adjustment amount according to the fourth embodiment.
[FIG. 13] FIG. 13 is a diagram illustrating device configurations of a water electrolysis system, a peripheral device, and a system according to a fifth embodiment.
[FIG. 14] FIG. 14 is a time chart illustrating a fifth operation example of a current and a pure water adjustment amount according to the fifth embodiment.
[FIG. 15] FIG. 15 is a flowchart illustrating operation processing of the fifth operation example of the current and the pure water adjustment amount according to the fifth embodiment.
[FIG. 16] FIG. 16 is a time chart illustrating a sixth operation example of a current and a pure water adjustment amount according to a sixth embodiment.
[FIG. 17] FIG. 17 is a flowchart illustrating operation processing of the sixth operation example of the current and the pure water adjustment amount according to the sixth embodiment.
[FIG. 18] FIG. 18 is a flowchart illustrating operation processing of an operation-mode switching operation example according to a seventh embodiment.
[FIG. 19] FIG. 19 is a flowchart illustrating operation processing of a first operation example in the operation-mode switching operation example according to the seventh embodiment.
[FIG. 20] FIG. 20 is a flowchart illustrating operation processing of a second operation example in the operation-mode switching operation example according to the seventh embodiment.

### Description of Embodiments

Hereinafter, embodiments of the present invention will be described with reference to the drawings and the like. The following description shows specific examples of the contents of the present invention, and the present invention is not limited to the description, and various changes and modifications can be made by those skilled in the art within the scope of the technical idea disclosed in the present specification. In all the drawings for describing the present invention, components having the same function are denoted by the same reference signs, and a repeated description thereof may be omitted.

### <Water Electrolysis System>

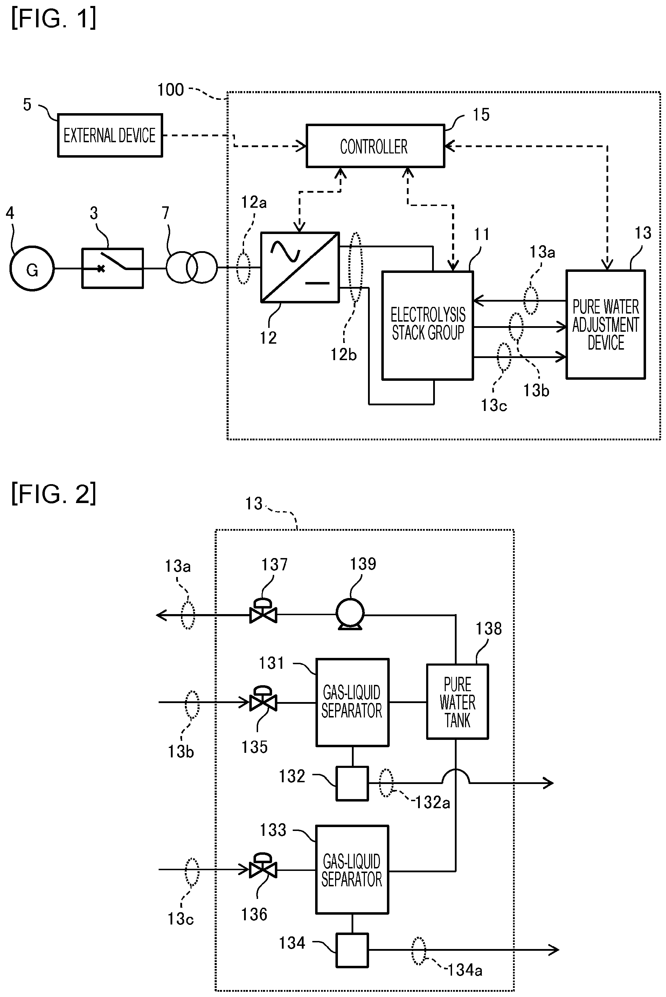

FIG. 1 is a diagram illustrating a device configuration of a water electrolysis system 100 according to an embodiment of the present invention. In the water electrolysis system 100, an electrolysis stack group 11 is connected to a direct-current (DC)-side connection end 12b of a power converter 12, and pure water is electrolyzed into hydrogen and oxygen according to a current applied from the power converter 12 to the electrolysis stack group 11. Further, a pure water adjustment device 13 is connected to the electrolysis stack group 11, the pure water is supplied through a pipe 13a, the hydrogen generated in the electrolysis stack group 11 and pure water that has not been used for water electrolysis are collected through a pipe 13b, and the oxygen generated in the electrolysis stack group and the pure water that has not been used for water electrolysis are collected through a pipe 13c. Further, the water electrolysis system 100 includes a controller 15 (control device), and the controller 15 performs operation state detection and operation state adjustment of the electrolysis stack group 11, the power converter 12, and the pure water adjustment device 13.

The controller 15 includes, for example, a central processing unit (CPU), a random access memory (RAM), and a read only memory (ROM). The controller 15 is embodied by developing, in the RAM, a predetermined program (control program) stored in the ROM and executing the program by the CPU. The program here is for causing a computer to execute a control method.

The water electrolysis system 100 has a configuration in which a transformer 7 is connected to an alternating-current (AC)-side connection end 12a of the power converter 12, the transformer 7 is connected to a switch 3, and the switch 3 is connected to a system 4, and supplies power from the system 4 to components of the water electrolysis system 100 by adjusting the power converter 12.

The controller 15 included in the water electrolysis system 100 has a function of receiving information output from an external device 5. The external device 5 may be, for example, power supply equipment or power consumption equipment installed around the water electrolysis system 100, may be a control device that integrally manages the power supply equipment or the power consumption equipment, may be an instruction from an organization that manages a state of a power system in a wide area, or may be electric power market transaction information (electric power market information) such as a spot price of electricity.

The controller 15 also has a function of importing external information such as voltages of the water electrolysis system 100 and the system, and determines an operation state of the water electrolysis system 100 based on various types of information.

Here, types of the electrolysis stacks included in the electrolysis stack group 11 are roughly classified into an alkaline type and a solid polymer type, but in the embodiment, it is assumed that solid polymer type water electrolysis stacks are adopted as the electrolysis stacks. The solid polymer type has a higher response speed compared with the alkaline type, and is thus suitable as a water electrolysis system for following fluctuations of renewable energy. In addition, the solid polymer type electrolysis stack can have a smaller size compared with the alkaline type, and is thus suitable as a system requiring space saving, like those installed offshore in the vicinity of an offshore wind power generation system.

FIG. 2 is a diagram illustrating a configuration of the pure water adjustment device 13 included in the water electrolysis system 100. A valve 135 capable of adjusting a flow rate is connected to the pipe 13b through which the hydrogen and the pure water discharged from the electrolysis stack group 11 are transported, a gas-liquid separator 131 for separating the hydrogen and the pure water is connected at a position downstream of the valve 135, a pure water tank 138 for storing the pure water discharged from the gas-liquid separator 131 is connected at a position downstream of the gas-liquid separator 131, a water supply pump 139 for pressurized transportation is connected at a position downstream of the pure water tank 138, a valve 137 capable of adjusting the flow rate of the pure water supplied to the electrolysis stack group 11 is connected at a position downstream of the water supply pump 139, and the pure water is supplied to the electrolysis stack group 11 through the pipe 13a. A pressure adjustment valve 132 is connected to the gas-liquid separator 131, and an internal pressure of the gas-liquid separator 131 is adjusted, and the hydrogen is supplied to the outside of the water electrolysis system 100 through a pipe 132a. In addition, a valve 136 capable of adjusting a flow rate is connected to the pipe 13c through which the oxygen and the pure water discharged from the electrolysis stack group 11 are transported, a gas-liquid separator 133 for separating the oxygen and the pure water is connected at a position downstream of the valve 136, and the pure water discharged from the gas-liquid separator 133 is transported to the pure water tank 138 at a position downstream of the gas-liquid separator 133. A pressure adjustment valve 134 is connected to the gas-liquid separator 133, and an internal pressure of the gas-liquid separator 133 is adjusted, and the oxygen is supplied to the outside of the water electrolysis system 100 through a pipe 134a.

Means for adjusting a pressure of the pure water supplied to the electrolysis stack group 11 will be described below.

First means for adjusting the pressure can be implemented by adjusting the internal pressures of the gas-liquid separators 131 and 133 using the pressure adjustment valves 132 and 134. Second means for adjusting the pressure can be implemented by adjusting an output pressure of the water supply pump 139. Third means for adjusting the pressure can be implemented by simultaneously implementing the first means for adjusting the pressure and the second means for adjusting the pressure. Hereinafter, in the embodiment, the pressure of the pure water is adjusted by any one of the means for adjusting the pressure described above.

Means for adjusting the flow rate of the pure water supplied to the electrolysis stack group 11 will be described below.

First means for adjusting the flow rate can be implemented by adjusting opening degrees of the valves 135 and 136. Second means for adjusting the flow rate can be implemented by adjusting an opening degree of the valve 137. Third means for adjusting the flow rate can be implemented by simultaneously implementing the first means for adjusting the flow rate and the second means for adjusting the flow rate. Hereinafter, in the embodiment, the pressure of the pure water is adjusted by any one of the means for adjusting the pressure described above.

### <<First Operation Example of Current and Pure Water Adjustment Amount>>

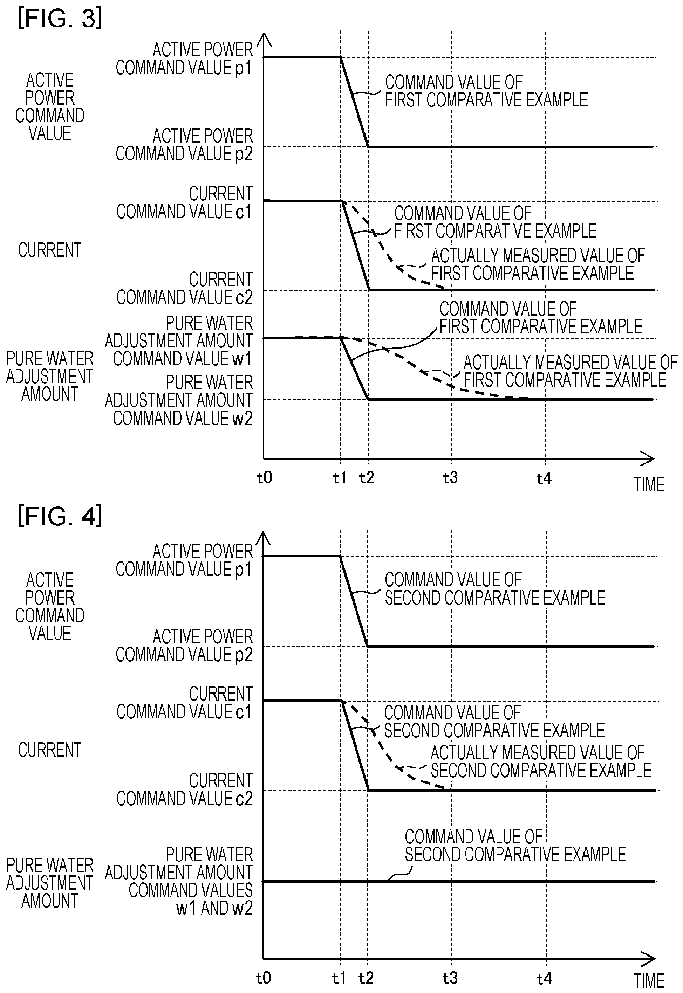

Hereinafter, a first operation example of a control method of changing the current supplied to the electrolysis stack group 11 and a pure water adjustment amount will be described with reference to FIGS. 3 to 6. Hereinafter, the pressure or/and flow rate of the pure water is defined as the pure water adjustment amount. An active power command value p1 and an active power command value p2, a current command value c1 and a current command value c2, and a pure water adjustment amount command value w1 and a pure water adjustment amount command value w2 will be described for a case where each command value denoted by 1 is larger than each command value denoted by 2 (c1 > c2 and w1 > w2), but the present invention is not limited thereto, and the same operation method is also executed in a case where each command value denoted by 1 is smaller than each command value denoted by 2 (c1 < c2 and w1 < w2).

FIG. 3 is a time chart illustrating operations of a current and a pure water adjustment amount in a first comparative example. That is, FIG. 3 is a time chart illustrating an example of the operations of the current and the pure water adjustment amount in the comparative example in a case where the embodiment of the present invention is not applied, which is used as a comparative description for the embodiment of the present invention. In FIG. 3, a horizontal axis represents time, and a vertical axis represents an active power command value required for a water electrolysis system 100, the current applied to an electrolysis stack group 11, and the pure water adjustment amount from top to bottom. Upper sides of the figures respectively indicate a higher active power command value, a higher current, and a larger pure water adjustment amount. For the current, a command value indicated by a solid line and an actually measured value indicated by a broken line are included, and for the pure water adjustment amount, a command value indicated by a solid line and an actually measured value indicated by a broken line are included.

The electrolysis stack group 11 includes a plurality of electrolysis stacks, and generally, the electrolysis stacks are connected in parallel to a power supply, so that the current of each electrolysis stack is controlled. On the other hand, in a case where multiple electrolysis stacks are connected in series, the current becomes constant across all of the electrolysis stacks connected in series. At the time of control according to a change in the active power command value, the sum of the power of the respective electrolysis stacks is controlled to match the active power command value.

In the first comparative example, it is assumed that after the active power command value required for the water electrolysis system 100 is maintained at an active power command value p1 from time t0 to time t1, the active power command value is decreased from the active power command value p1 to an active power command value p2 from time t1 to time t2, and the active power command value p2 is maintained at or after time t2.

Time t1 may be a time at which the change in the active power command value is started, or time t1 may be determined after the change in the active power command value is detected or received at a timing before time t1.

In the first comparative example, a current command value and a pure water adjustment amount command value are decreased from time t1 to time t2 according to the change in the active power command value. As the current command value is changed from a current command value c1 to a current command value c2, the actually measured value of the current is decreased from time t1 and matches with the current command value c2 at time t3. In addition, as the pure water adjustment amount command value is changed from a pure water adjustment amount command value w1 to a pure water adjustment amount command value w2, the actually measured value of the pure water adjustment amount is started to decrease from time t1, and matches with the pure water adjustment amount command value w2 at time t4.

In this case, since a response speed of the current is higher than a response speed of the pure water adjustment amount, there is a difference between a time taken for the actually measured value of the current to match with the corresponding command value 2 and a time taken for the actually measured value of the pure water adjustment amount to match with the corresponding command value 2 (the actually measured value of the current matches with the current command value c2 at time t3, and the actually measured value of the pure water adjustment amount matches with the pure water adjustment amount command value w2 at time t4).

Due to such a difference in response speed, a state in the vicinity of an electrolytic membrane of the electrolysis stack group 11 is not appropriate in some cases. In a case where the current is decreased as illustrated in FIG. 3, since the change in the actually measured value of the pure water adjustment amount is slower than a decrease in the actually measured value of the current, the vicinity of the electrolytic membrane becomes a supercooled state than a steady state, so that a resistance value may increase and water electrolysis efficiency may deteriorate. Contrary to FIG. 3, in a case where the actually measured value of the current is increased, since an increase in the pure water adjustment amount is slower than an increase in the current, the generated hydrogen gas and oxygen gas are not sufficiently discharged, a relative area of the electrolytic membrane is reduced, or the pure water supply amount is reduced, and the vicinity of the electrolytic membrane is overheated, as a result of which deterioration of the electrolytic membrane may easily proceed. There is a possibility of causing an increase in power loss and deterioration of the electrolysis stack by experiencing such a state in which there is a difference in response speed many times.

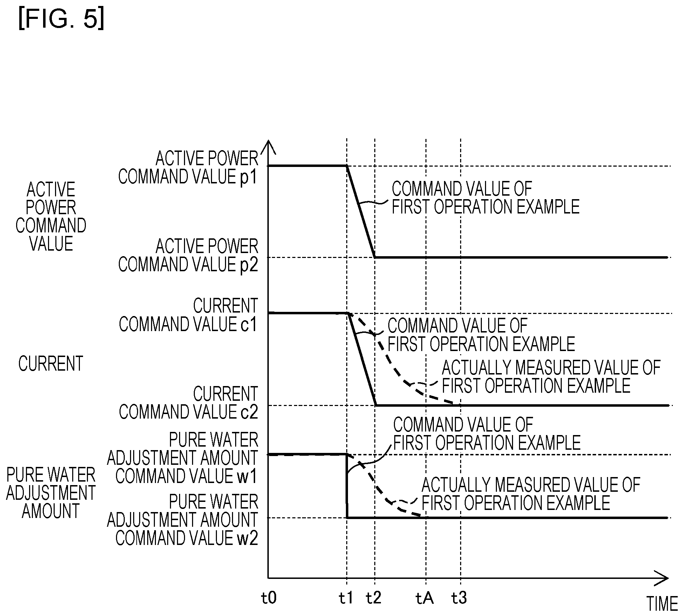

The pure water adjustment amount (pure water adjustment amount command value) is the same in any of the cases of the pressure, the flow rate, and the pressure and the flow rate (the same applies to FIGS. 4, 5, and the like described below).

FIG. 4 is a time chart illustrating operations of a current and a pure water adjustment amount in a second comparative example. Since a horizontal axis and a vertical axis of the figure are similar to those of FIG. 3, a description thereof is omitted. FIG. 4 illustrates an operation example in which a pure water adjustment amount command value w1 and a pure water adjustment amount command value w2 are caused to match with each other. For example, by adjusting the pure water adjustment amount command values w1 and w2 according to a state in which the current is at a rated value and increasing the pure water adjustment amount regardless of the current, it is possible to avoid retention of generated gas in the vicinity of an electrolytic membrane and an overheated state, which may occur in the example of FIG. 3. However, there is a possibility that electrolysis efficiency of a water electrolysis system 100 is lowered (a loss is increased) due to necessity of power to constantly maintain a large pure water adjustment amount and an increase in electrolysis resistance due to the supercooling of the electrolytic membrane.

### <First Embodiment>

FIG. 5 is a time chart illustrating a first operation example of a current and a pure water adjustment amount according to a first embodiment. Since a horizontal axis and a vertical axis of the figure are similar to those of FIG. 3, a description thereof is omitted. In FIG. 5, in order to eliminate a condition that a response speed of an actually measured value of the pure water adjustment amount is lower than a response speed of an actually measured value of the current, a pure water adjustment amount command value is immediately changed from a pure water adjustment amount command value w1 to a pure water adjustment amount command value w2 at time t1 at which an active power command value starts to be changed from an active power command value p1 to an active power command value p2. As a result, the actually measured value of the pure water adjustment amount can be changed from time t1, and can be caused to match with the pure water adjustment amount command value w2 (the actually measured value of the pure water adjustment amount can be caused to match with the pure water adjustment amount command value w2 before time t3) by time tA, which is earlier than time t3 at which the actually measured value of the current matches with a current command value c2. That is, a controller 15 which is a control device executes step A. As a result, it is possible to maintain a more appropriate state in the vicinity of an electrolytic membrane as compared with the first comparative example described above.

That is, step A is a step of causing an actually measured value of a pressure or/and a flow rate to reach a second pure water adjustment amount command value from a first pure water adjustment amount command value before the actually measured value of the current applied from a power converter 12 to an electrolysis stack group 11 reaches a second current command value from a first current command value (current command value c1) when a current command value is changed from a first current command value (current command value c1) to the second current command value (current command value c2) that is a different value and the pure water adjustment amount command value is changed from the first pure water adjustment amount command value (pure water adjustment amount command value w1) to the second pure water adjustment amount command value (pure water adjustment amount command value w2) that is a different value.

On the other hand, in the case of Comparative Example 1 illustrated in FIG. 3, step B is performed. Step B is a step of causing the actually measured value of the pressure or/and the flow rate to reach the second pure water adjustment amount command value from the first pure water adjustment amount command value after the actually measured value of the current reaches the second current command value from the first current command value when the current command value is changed from the first current command value to the second current command value and the pure water adjustment amount command value is changed from the first pure water adjustment amount command value to the second pure water adjustment amount command value.

As compared with the present embodiment, in the second comparative example, as described above, there is a possibility that electrolysis efficiency of a water electrolysis system 100 is lowered (the loss is increased) due to the necessity of the power to constantly maintain a large pure water adjustment amount and an increase in electrolysis resistance due to the supercooling of the electrolytic membrane.

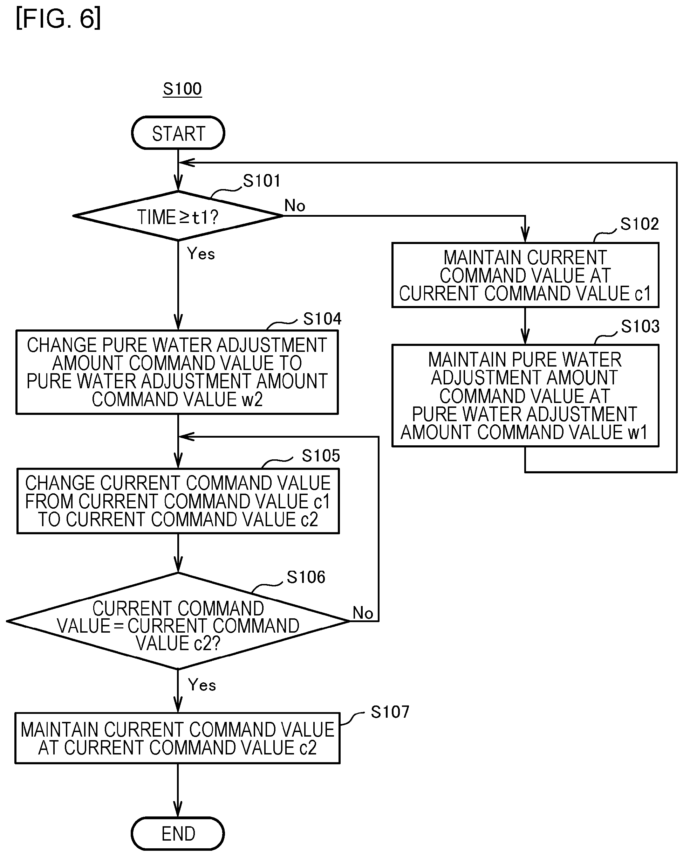

FIG. 6 is a flowchart illustrating operation processing S100 of the first operation example of the current and the pure water adjustment amount according to the first embodiment. The processing of the flowchart illustrated in FIG. 6 is implemented in the controller 15 (see FIG. 1). In the description of the processing, FIG. 4 is appropriately referred to. In a state in which the active power command value is maintained from time t0, the time is monitored in step S101, and if time t is before time t1 (step S101: No), the processing proceeds to step S102. In step S102, the current command value is maintained at the current command value c1 according to the maintained active power command value, and the processing proceeds to step S103. In step S103, the pure water adjustment amount command value is maintained at the pure water adjustment amount command value w1 according to the maintained active power command value. In step S101, in a case where time t is time t1 or after time t1 (step S101: Yes), the processing proceeds to step S104. In step S104, in order to quickly change the actually measured value of the pure water adjustment amount, the pure water adjustment amount command value is changed from the pure water adjustment amount command value w1 to the pure water adjustment amount command value w2, and the processing proceeds to step S105. In step S105, the current command value is changed from the current command value c1 to the current command value c2 according to a change in the active power command value, and the processing proceeds to step S106. In step S106, the change in the current command value is monitored, and in a case where the current command value has not reached the current command value c2 (step S106: No), the processing of step S105 is continued. In step S106, it is confirmed that the current command value matches with the current command value c2 (step S106: Yes), and then the processing proceeds to step S107. In step S107, the current command value is maintained at the current command value c2, and a series of operations ends.

### <<Second Operation Example of Current and Pure Water Adjustment Amount>>

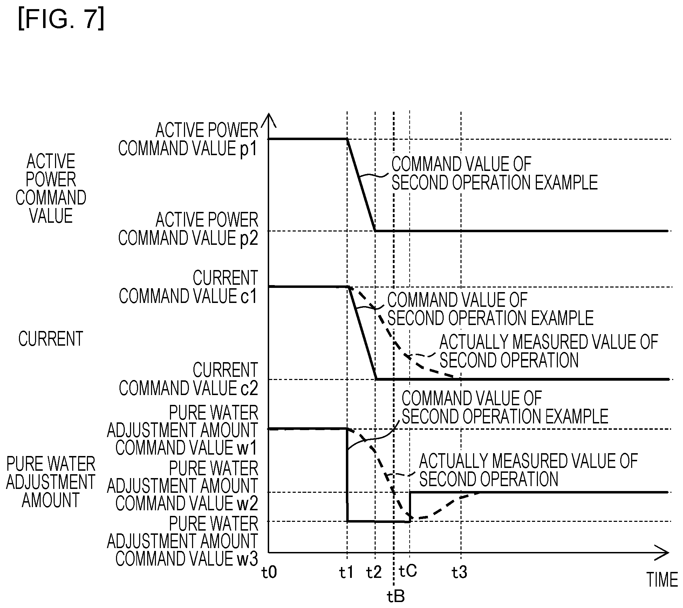

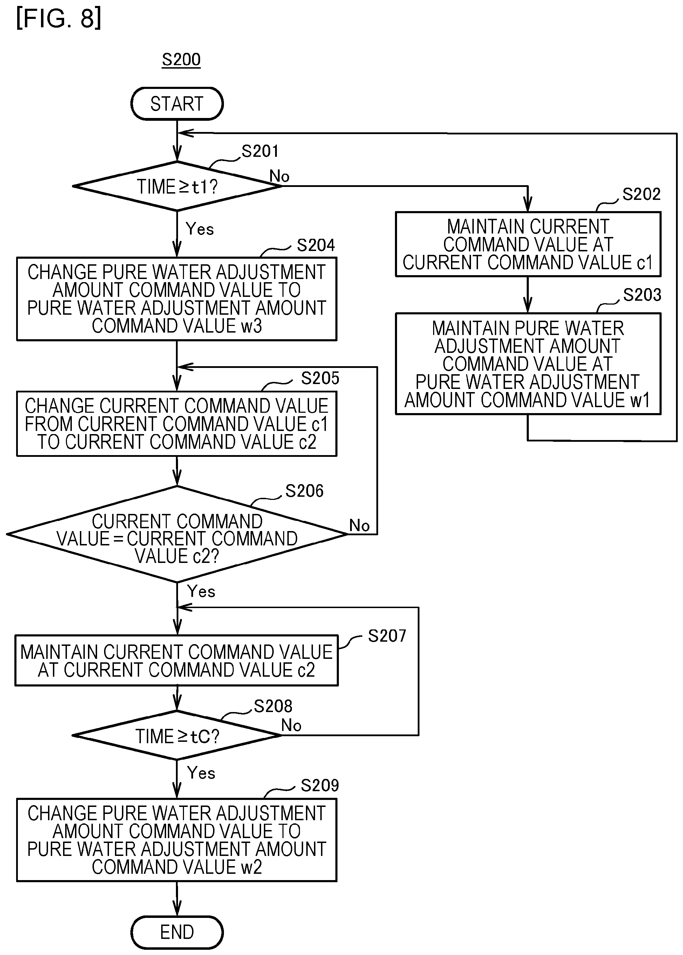

Hereinafter, a second operation example of a control method of changing the current supplied to the electrolysis stack group 11 and a pure water adjustment amount will be described with reference to FIGS. 7 and 8. The active power command value p1 and the active power command value p2, the current command value c1 and the current command value c2, and the pure water adjustment amount command value w1 and the pure water adjustment amount command value w2 will be described for a case where each command value denoted by 1 is larger than each command value denoted by 2, but the present invention is not limited thereto, and the same operation method is also executed in a case where each command value denoted by 1 is smaller than each command value denoted by 2.

### <Second Embodiment>

FIG. 7 is a time chart illustrating a second operation example of a current and a pure water adjustment amount according to a second embodiment. Since a horizontal axis and a vertical axis of the figure are similar to those of FIG. 3, a description thereof is omitted. In FIG. 7, in order to eliminate a condition that a response speed of an actually measured value of the pure water adjustment amount is lower than a response speed of an actually measured value of the current, a pure water adjustment amount command value is immediately changed from a pure water adjustment amount command value w1 to a pure water adjustment amount command value w3 at time t1 at which an active power command value starts to be changed from an active power command value p1 to an active power command value p2. At this time, in order to make a response speed of the actually measured value of the pure water adjustment amount higher than that in the first operation example, the pure water adjustment amount command value is changed to the pure water adjustment amount command value w3 smaller than a pure water adjustment amount command value w2. As a result, the actually measured value of the pure water adjustment amount can be changed from time t1, and can be caused to match with the pure water adjustment amount command value w2 by time tB, which is earlier than time t3 at which the actually measured value of the current matches with a current command value c2. After the actually measured value of the pure water adjustment amount matches with the pure water adjustment amount command value w2, the pure water adjustment amount command value w is changed from the pure water adjustment amount command value w3 to the pure water adjustment amount command value w2 at time tC in order to cause the actually measured value of the pure water adjustment amount to match with the pure water adjustment amount command value w2. By the above adjustment, it is possible to maintain a more appropriate state in the vicinity of an electrolytic membrane as compared with the first comparative example described above.

Similarly to the first operation example described above, time t1 may be a time at which the change in the active power command value is started, or time t1 may be determined after the change in the active power command value is detected or received at a timing before time t1.

FIG. 8 is a flowchart illustrating operation processing S200 of the second operation example of the current and the pure water adjustment amount according to the second embodiment. The processing of the flowchart illustrated in FIG. 8 is implemented in a controller 15 (see FIG. 1). In the description of the processing, FIG. 7 is appropriately referred to. In a state in which the active power command value is maintained from time t0, the time is monitored in step S201, and if time t is before time t1 (step S201: No), the processing proceeds to step S202. In step S202, the current command value is maintained at a current command value c1 according to the maintained active power command value, and the processing proceeds to step S203. In step S203, the pure water adjustment amount command value is maintained at the pure water adjustment amount command value w1 according to the maintained active power command value. In step S201, in a case where time t is time t1 or after time t1 (step S201: Yes), the processing proceeds to step S204. In step S204, in order to quickly change the actually measured value of the pure water adjustment amount, the pure water adjustment amount command value is changed from the pure water adjustment amount command value w1 to the pure water adjustment amount command value w3, and the processing proceeds to step S205. In step S205, the current command value is changed from the current command value c1 to the current command value c2 according to a change in the active power command value, and the processing proceeds to step S206. In step S206, the change in the current command value is monitored, and in a case where the current command value c has not reached the current command value c2 (step S206: No), the processing of step S205 is continued. In step S206, it is confirmed that the current command value matches with the current command value c2 (step S106: Yes), and then the processing proceeds to step S207. In step S207, the current command value is maintained at the current command value c2, and the processing proceeds to step S208. In step S208, the time is monitored, and if time t is before time tC (step S208: No), the processing returns to step S207. In step S208, if time t is time tC or after time tC (step S208: Yes), the processing proceeds to step S209. In step S209, in order to cause the actually measured value of the pure water adjustment amount to match with the pure water adjustment amount command value w2, the pure water adjustment amount command value is changed from the pure water adjustment amount command value w3 to the pure water adjustment amount command value w2, and then a series of operations ends.

As described above, the second operation example according to the second embodiment described with reference to FIGS. 7 and 8 is different from the first operation example according to the first embodiment described with reference to FIGS. 5 and 6 in that the actually measured value of the pure water adjustment amount undershoots (or overshoots). As a result, in the second operation example, the actually measured value of the pure water adjustment amount can be changed faster than in the first operation example.

### <<Third Operation Example of Current and Pure Water Adjustment Amount>>

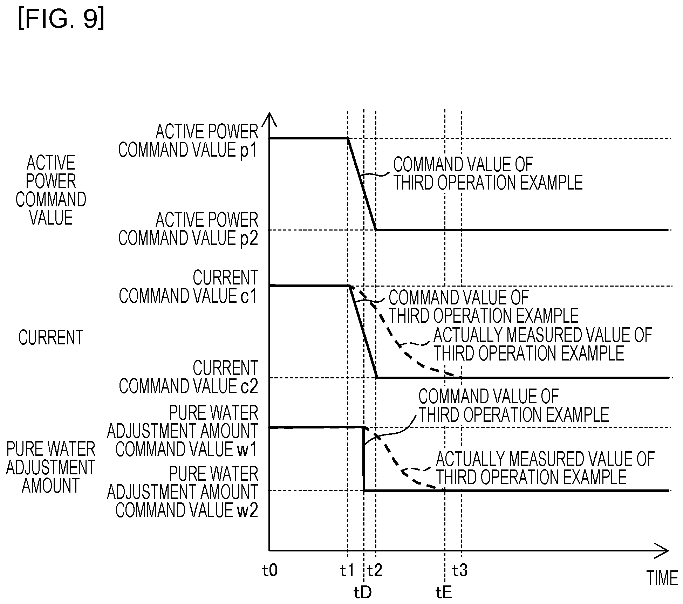

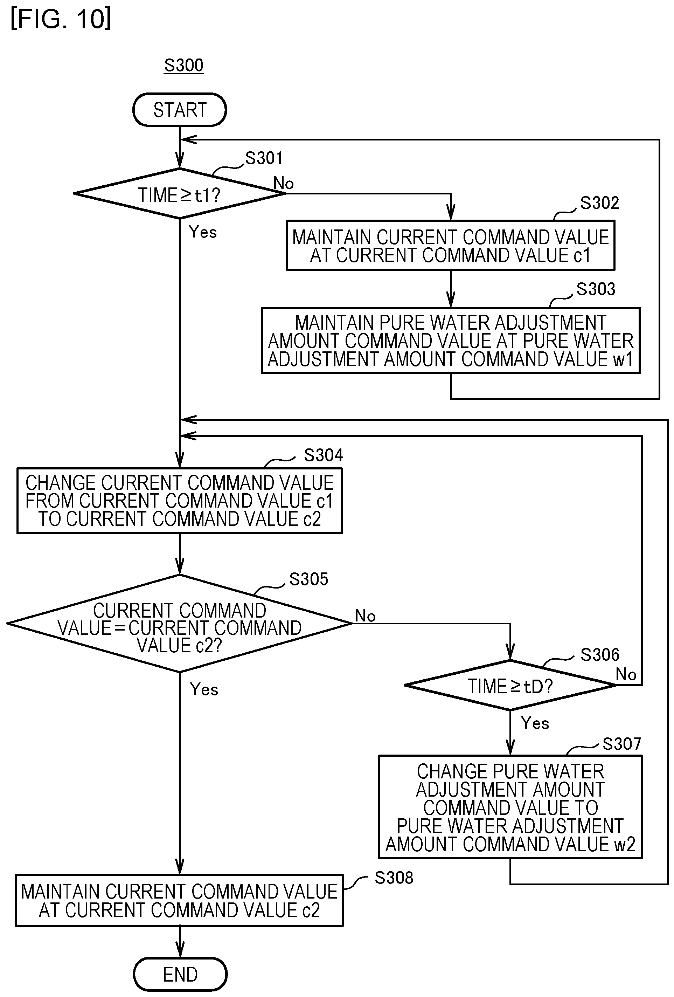

Hereinafter, a third operation example of a control method of changing the current supplied to the electrolysis stack group 11 and the pure water adjustment amount will be described with reference to FIGS. 9 and 10. The active power command value p1 and the active power command value p2, the current command value c1 and the current command value c2, and the pure water adjustment amount command value w1 and the pure water adjustment amount command value w2 will be described for a case where each command value denoted by 1 is larger than each command value denoted by 2, but the present invention is not limited thereto, and the same operation method is also executed in a case where each command value denoted by 1 is smaller than each command value denoted by 2.

The third operation example according to a third embodiment described below is different from the first and second operation examples according to the first and second embodiments described with reference to FIGS. 5 to 8 in that a change time of the actually measured value of the pure water adjustment amount and the pure water adjustment amount command value is changed from time tD at or after time t1.

### <Third Embodiment>

FIG. 9 is a time chart illustrating a third operation example of a current and a pure water adjustment amount according to the third embodiment. Since a horizontal axis and a vertical axis of the figure are similar to those of FIG. 3, a description thereof is omitted. In FIG. 9, in order to eliminate a condition that a response speed of an actually measured value of the pure water adjustment amount is lower than a response speed of an actually measured value of the current, a current command value is changed from a current command value c1 to a current command value c2 at time t1 at which an active power command value starts to be changed from an active power command value p1 to an active power command value p2, and a pure water adjustment amount command value is immediately changed from a pure water adjustment amount command value w1 to a pure water adjustment amount command value w2 at time tD after time t1. As a result, even in a case where the actually measured value of the pure water adjustment amount is changed at or after time t1, the actually measured value of the pure water adjustment amount can be caused to match with the pure water adjustment amount command value w2 by time tE which is earlier than time t3 at which the actually measured value of the current matches with the current command value c2. As a result, it is possible to maintain a more appropriate state in the vicinity of an electrolytic membrane as compared with the first comparative example described above.

Similarly to the operation example described above, time t1 may be a time at which the change in the active power command value is started, or time t1 may be determined after the change in the active power command value is detected or received at a timing before time t1.

FIG. 10 is a flowchart illustrating operation processing S300 of the third operation example of the current and the pure water adjustment amount according to the third embodiment. The processing of the flowchart illustrated in FIG. 10 is implemented in a controller 15 (see FIG. 1). In the description of the processing, FIG. 9 is appropriately referred to. In a state in which the active power command value is maintained from time t0, the time is monitored in step S301, and if time t is before time t1 (step S301: No), the processing proceeds to step S302. In step S302, the current command value is maintained at the current command value c1 according to the maintained active power command value, and the processing proceeds to step S303. In step S303, the pure water adjustment amount command value is maintained at the pure water adjustment amount command value w1 according to the maintained active power command value. In step S301, in a case where time t is time t1 or after time t1 (step S301: Yes), the processing proceeds to step S304. In step S304, the current command value is changed from the current command value c1 to the current command value c2 according to a change in the active power command value, and the processing proceeds to step S305. In step S305, the change in the current command value is monitored, and in a case where the current command value has not reached the current command value c2 (step S305: No), the processing proceeds to step S306. In step S306, time t is monitored, and if time t is before time tD (step S306: No), the processing returns to step S304. In step S306, if time t is time tD or after time tD (step S306: Yes), the processing proceeds to step S307. In step S307, in order to quickly change the actually measured value of the pure water adjustment amount, the pure water adjustment amount command value is changed from the pure water adjustment amount command value w1 to the pure water adjustment amount command value w2, and the processing returns to step S304. After step S304 is performed, it is confirmed in step S305 that the current command value matches with the current command value c2 (step S305: Yes), and then the processing proceeds to step S308. In step S308, after the current command value is maintained at the current command value c2, a series of operations ends.

### <<Fourth Operation Example of Current and Pure Water Adjustment Amount>>

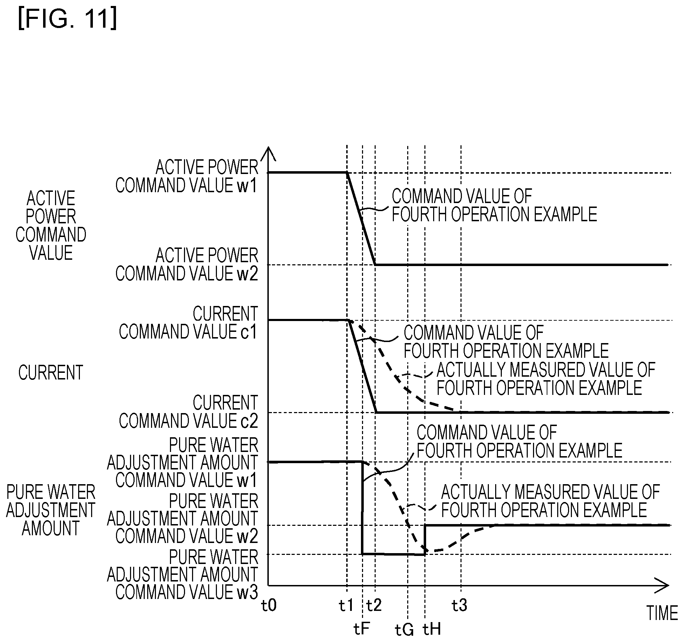

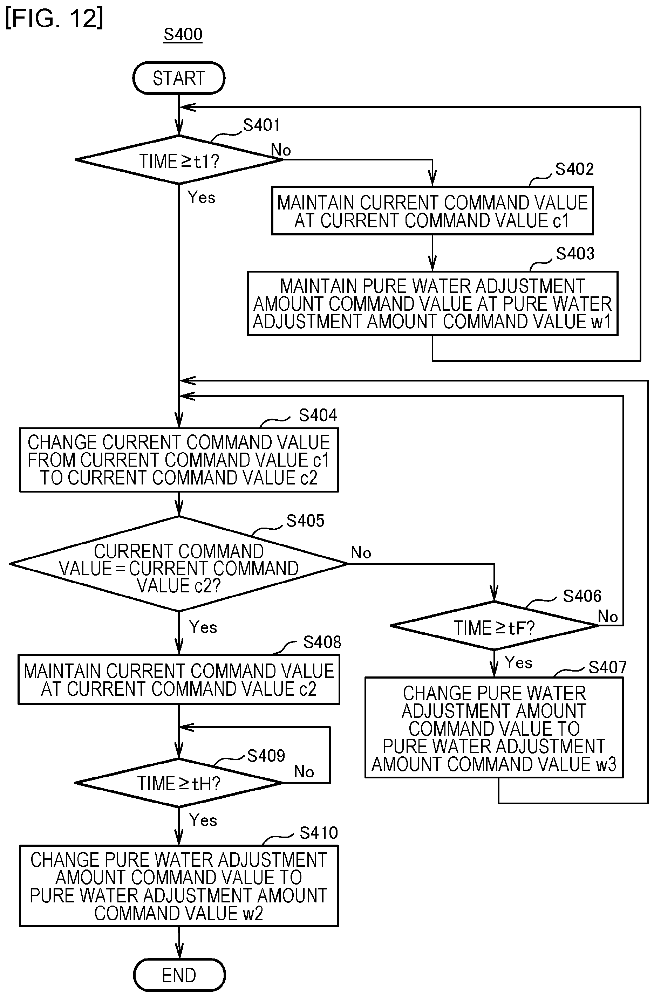

Hereinafter, a fourth operation example of a control method of changing the current supplied to an electrolysis stack group 11 and the pure water adjustment amount will be described with reference to FIGS. 11 and 12. The active power command value p1 and the active power command value p2, the current command value c1 and the current command value c2, and the pure water adjustment amount command value w1 and the pure water adjustment amount command value w2 will be described for a case where each command value denoted by 1 is larger than each command value denoted by 2, but the present invention is not limited thereto, and the same operation method is also executed in a case where each command value denoted by 1 is smaller than each command value denoted by 2.

The fourth operation example according to a fourth embodiment described below is different from the first and second operation examples according to the first and second embodiments described with reference to FIGS. 5 to 8 in that a change time of the actually measured value of the pure water adjustment amount and the pure water adjustment amount command value is changed from time tF at or after time t1. In addition, unlike the third operation example according to the third embodiment described with reference to FIGS. 9 and 10, the actually measured value of the pure water adjustment amount undershoots (or overshoots).

### <Fourth Embodiment>

FIG. 11 is a time chart illustrating a fourth operation example of a current and a pure water adjustment amount according to the fourth embodiment. Since a horizontal axis and a vertical axis of the figure are similar to those of FIG. 4, a description thereof is omitted. In FIG. 11, in order to eliminate a condition that a response speed of an actually measured value of the pure water adjustment amount is lower than a response speed of an actually measured value of the current, a current command value is changed from a current command value c1 to a current command value c2 at time t1 at which an active power command value starts to be changed from an active power command value p1 to an active power command value p2, and a pure water adjustment amount command value is immediately changed from a pure water adjustment amount command value w1 to a pure water adjustment amount command value w3 at time tF after time t1. As a result, the actually measured value of the pure water adjustment amount can be changed from time tF, and can be caused to match with a pure water adjustment amount command value w2 by time tG, which is earlier than time t3 at which the actually measured value of the current matches with the current command value c2. After the actually measured value of the pure water adjustment amount matches with the pure water adjustment amount command value w2, the pure water adjustment amount command value w is changed from the pure water adjustment amount command value w3 to the pure water adjustment amount command value w2 at time tH in order to cause the actually measured value of the pure water adjustment amount to match with the pure water adjustment amount command value w2. By the above adjustment, it is possible to maintain a more appropriate state in the vicinity of an electrolytic membrane as compared with the first comparative example described above.

Similarly to the operation example described above, time t1 may be a time at which the change in the active power command value is started, or time t1 may be determined after the change in the active power command value is detected or received at a timing before time t1.

FIG. 12 is a flowchart illustrating operation processing S400 of the fourth operation example of the current and the pure water adjustment amount according to the fourth embodiment. The processing of the flowchart illustrated in FIG. 12 is implemented in a controller 15 (see FIG. 1). In the description of the processing, FIG. 11 is appropriately referred to. In a state in which the active power command value is maintained from time t0, the time is monitored in step S401, and if time t is before time t1 (step S401: No), the processing proceeds to step S402. In step S402, the current command value is maintained at the current command value c1 according to the maintained active power command value, and the processing proceeds to step S403. In step S403, the pure water adjustment amount command value is maintained at the pure water adjustment amount command value w1 according to the maintained active power command value. In step S401, in a case where time t is time t1 or after time t1 (step S401: Yes), the processing proceeds to step S404. In step S404, the current command value is changed from the current command value c1 to the current command value c2 according to a change in the active power command value, and the processing proceeds to step S405. In step S405, the change in the current command value is monitored, and in a case where the current command value has not reached the current command value c2 (step S405: No), the processing proceeds to step S406. In step S406, time t is monitored, and if time t is before time tF (step S406: No), the processing returns to step S404. In step S406, if time t is time tF or after time tF (step S406: Yes), the processing proceeds to step S407. In step S407, in order to quickly change the actually measured value of the pure water adjustment amount, the pure water adjustment amount command value is changed from the pure water adjustment amount command value w1 to the pure water adjustment amount command value w3, and the processing returns to step S404. After step S404 is performed, it is confirmed in step S405 that the current command value matches with the current command value c2 (step S405: Yes), and then the processing proceeds to step S408. In step S408, the current command value is maintained at the current command value c2, and then the processing proceeds to step S409. In step S409, time t is monitored, and if time t is before time tH (step S409: No), the processing returns to the step immediately before step S409. In step S409, if time t is time tH or after time tH (step S409: Yes), the processing proceeds to step S410. In step S410, the pure water adjustment amount command value is changed from the pure water adjustment amount command value w3 to the pure water adjustment amount command value w2, and a series of operations ends.

### <<Fifth Operation Example of Current and Pure Water Adjustment Amount>>

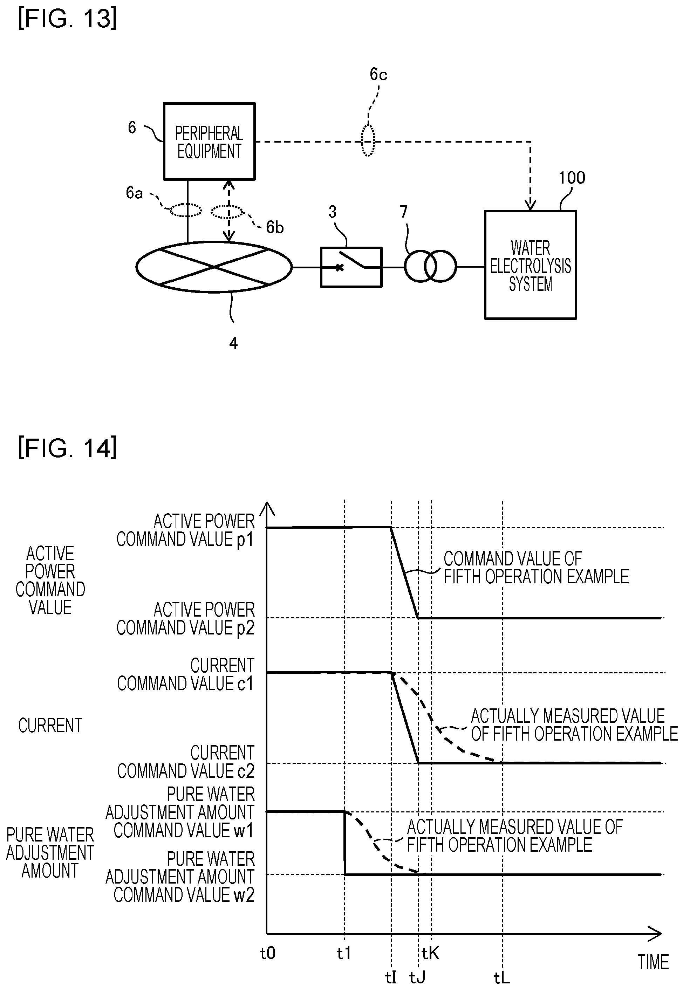

Hereinafter, a fifth operation example of a control method of changing the current supplied to an electrolysis stack group 11 and the pure water adjustment amount will be described with reference to FIGS. 13 to 15. The active power command value p1 and the active power command value p2, the current command value c1 and the current command value c2, and the pure water adjustment amount command value w1 and the pure water adjustment amount command value w2 will be described for a case where each command value denoted by 1 is larger than each command value denoted by 2, but the present invention is not limited thereto, and the same operation method is also executed in a case where each command value denoted by 1 is smaller than each command value denoted by 2.

In the four operation examples according to the first to fourth embodiments, the current command value and the pure water adjustment amount command value are determined based on the active power command value required for a water electrolysis system 100, and the current and the pure water adjustment amount according to each command value are changed. In the fifth operation example which is a fifth embodiment described below, as external information input to the water electrolysis system 100, information with which the change of the active power command value can be grasped in advance is used.

Examples of the external information may include active power and reactive power that determine a hydrogen production amount of the water electrolysis system 100 itself. A time to change the active power and the reactive power may be set in advance with a touch panel or the like installed in peripheral equipment 6 and used to directly or indirectly operate the water electrolysis system 100, and the active power and the reactive power may be changed at the time set by a timer.

As an example of the external information, weather information may be used. With wind speed information or solar irradiation information, fluctuations in output of a wind power generation system, a solar power generation system, or the like that supplies power to the water electrolysis system 100 can be predicted. Such pieces of information may be weather forecast information, or may be output values of a wind speed sensor or a solar irradiation sensor around the wind power generation system or the solar power generation system described above or in an installation region of the power generation system.

As an example of the external information, electric power market price information for determining a power charge for receiving power by the water electrolysis system 100 may be used. The active power may be changed according to fluctuations of the electric power charge by sensing a time at which the electric power charge fluctuates in advance.

As an example of the external information, power information of equipment that supplies power and is installed around the water electrolysis system 100 may be used. As described above, the power information may be power information output from the wind power generation system or the solar power generation system, or the power information may be determined based on an operation status or a maintenance plan of a thermal power plant or a nuclear power plant.

As an example of the external information, load information of equipment that consumes power and is installed around the water electrolysis system 100 may be used. The load information may indicate a manufacturing device that is installed in a factory and consumes power, may indicate a large air conditioner, an electric furnace, or a rotary machine, or may be based on information regarding operation statuses (load statuses) thereof.

As an example of the external information, operation information of a device (power storage device) that stores power and is installed around the water electrolysis system 100 may be used. The operation status of the water electrolysis system 100 may be changed based on information indicating transmission and reception of power by charging and discharging of the power storage device.

### <Fifth Embodiment>

FIG. 13 is a diagram illustrating device configurations of a water electrolysis system, a peripheral device, and a system according to the fifth embodiment. It is assumed that a water electrolysis system 100 is connected to a system 4 via a transformer 7 and a switch 3, and a system is implemented by peripheral equipment 6 that transmits and receives power to and from the system 4 via a power line 6a. In addition to the power line 6a, the peripheral equipment 6 receives information regarding the system 4 and transmits information regarding the peripheral equipment 6 to the system 4 via a communication line 6b between the system 4 and the peripheral equipment 6. Further, the peripheral equipment 6 transmits the information regarding the peripheral equipment 6 to the water electrolysis system 100 via a communication line 6c. In the fifth operation example, it is assumed that a power transmission/reception state of the peripheral equipment 6 is transmitted to the water electrolysis system 100 in advance via the communication line 6c. As a result, the water electrolysis system 100 grasps the power transmission/reception state of the peripheral equipment 6 in advance, so that an operation state of the water electrolysis system 100 can be changed in advance at a time before an active power command value is changed.

FIG. 14 is a time chart illustrating the fifth operation example of a current and a pure water adjustment amount according to the fifth embodiment. Since a horizontal axis and a vertical axis of the figure are similar to those of FIG. 4, a description thereof is omitted. In FIG. 14, in order to eliminate a condition that a response speed of an actually measured value of the pure water adjustment amount is lower than a response speed of an actually measured value of the current, the pure water adjustment amount command value is changed from a pure water adjustment amount command value w1 to a pure water adjustment amount command value w2 at time t1 before an active power command value starts to be changed from an active power command value p1 to an active power command value p2 based on external information transmitted from the peripheral equipment 6. Thereafter, at time tI, as the active power command value is changed from the active power command value p1 to the active power command value p2, a current command value is changed from a current command value c1 to a current command value c2. Accordingly, the actually measured value of the current starts to be changed from time tI and is caused to match with the current command value c2 by time tL. However, by changing the pure water adjustment amount command value from the pure water adjustment amount command value w1 to the pure water adjustment amount command value w2 at time t1, the actually measured value of the pure water adjustment amount starts to be changed from time t1, and the actually measured value of the pure water adjustment amount can reach the pure water adjustment amount command value w2 by time tJ. By the above adjustment, it is possible to maintain a more appropriate state in the vicinity of an electrolytic membrane as compared with the first comparative example described above.

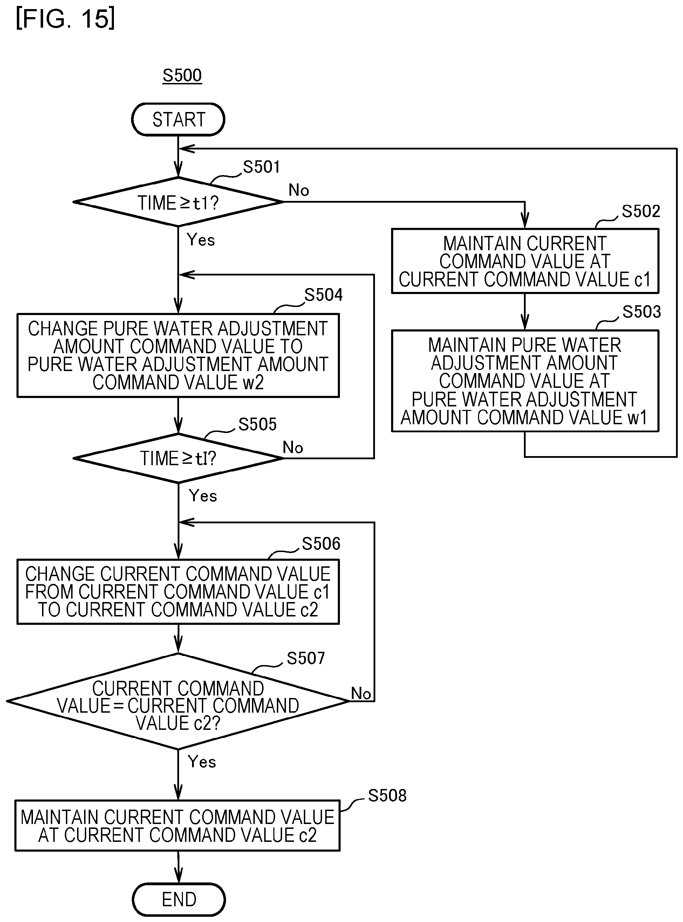

FIG. 15 is a flowchart illustrating operation processing S500 of the fifth operation example of the current and the pure water adjustment amount according to the fifth embodiment. The processing of the flowchart illustrated in FIG. 15 is implemented in a controller 15 (see FIG. 1). In the description of the processing, FIG. 12 is appropriately referred to. In a state in which the active power command value is maintained from time t0, the time is monitored in step S501, and if time t is before time t1 (step S501: No), the processing proceeds to step S502. In step S502, the current command value is maintained at the current command value c1 according to the maintained active power command value, and the processing proceeds to step S503. In step S503, the pure water adjustment amount command value is maintained at the pure water adjustment amount command value w1 according to the maintained active power command value. In step S501, in a case where time t is time t1 or after time t1 (step S501: Yes), the processing proceeds to step S504. In step S504, the pure water adjustment amount command value is changed from the pure water adjustment amount command value w1 to the pure water adjustment amount command value w2, and the processing proceeds to step S505. In step S505, the time is monitored, and if time t is before time tI (step S505: No), the processing returns to step S504. In a case where it is determined in step 505 that time t is time tI or after time tI (step S505: Yes), the processing proceeds to step S506. In step 506, the current command value is changed from the current command value c1 to the current command value c2, and the processing proceeds to step 507. In step S507, it is monitored whether or not the current command value matches with the current command value c2, and in a case where the current command value does not match with the current command value c2 (step S507: No), the processing returns to step S506. After it is determined in step 507 that the current command value matches with the current command value c2 (step S507: Yes), the processing proceeds to step S508. In step S508, after the current command value is maintained at the current command value c2, a series of operations ends.

### <<Sixth Operation Example of Current and Pure Water Adjustment Amount>>

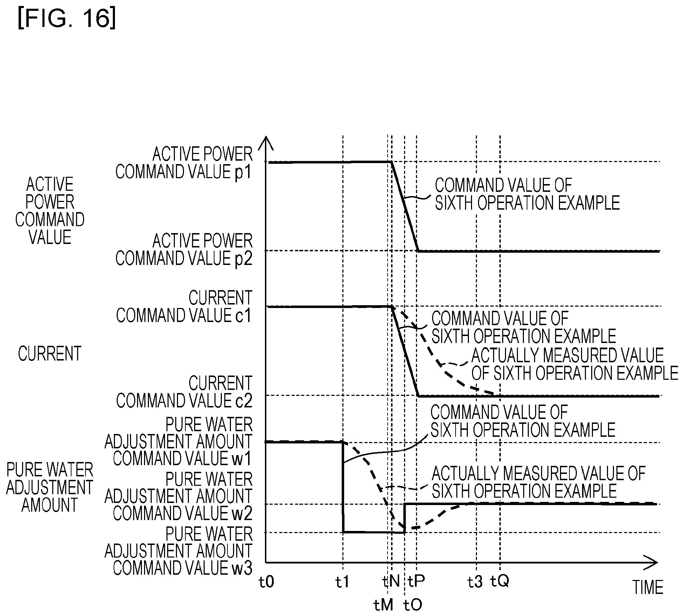

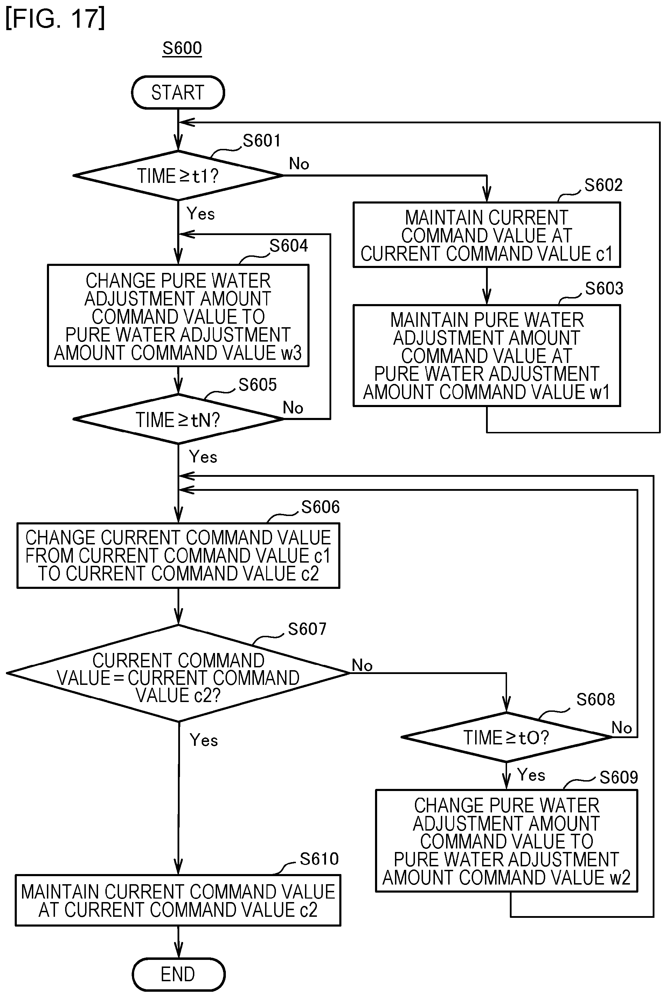

Hereinafter, a sixth operation example of a control method of changing the current supplied to an electrolysis stack group 11 and the pure water adjustment amount will be described with reference to FIGS. 16 and 17. The active power command value p1 and the active power command value p2, the current command value c1 and the current command value c2, and the pure water adjustment amount command value w1 and the pure water adjustment amount command value w2 will be described for a case where each command value denoted by 1 is larger than each command value denoted by 2, but the present invention is not limited thereto, and the same operation method is also executed in a case where each command value denoted by 1 is smaller than each command value denoted by 2.

In the sixth operation example described below, similarly to the above-described fifth operation example, it is assumed that the water electrolysis system 100 receives the external information from the peripheral equipment 6 and grasps in advance that the active power command value is changed.

The sixth operation example is different from the fifth operation example according to the fifth embodiment described with reference to FIGS. 13 to 15 in that the actually measured value of the pure water adjustment amount undershoots (or overshoots).

### <Sixth Embodiment>

FIG. 16 is a time chart illustrating a sixth operation example of a current and a pure water adjustment amount according to a sixth embodiment. Since a horizontal axis and a vertical axis of the figure are similar to those of FIG. 4, a description thereof is omitted. In FIG. 16, in order to eliminate a condition that a response speed of an actually measured value of the pure water adjustment amount is lower than a response speed of an actually measured value of the current, the pure water adjustment amount command value is changed from a pure water adjustment amount command value w1 to a pure water adjustment amount command value w3 at time t1 before an active power command value starts to be changed from an active power command value p1 to an active power command value p2 based on external information transmitted from the peripheral equipment 6. Thereafter, at time tN, as the active power command value is changed from the active power command value p1 to the active power command value p2, and the change ends by time tP, a current command value is changed from a current command value c1 to a current command value c2, and the change ends by time tQ. Accordingly, the actually measured value of the current starts to be changed from time tN and is caused to match with the current command value c2 by time tQ. However, by changing the pure water adjustment amount command value from the pure water adjustment amount command value w1 to the pure water adjustment amount command value w3 at time t1, the actually measured value of the pure water adjustment amount starts to be changed from time t1, and the actually measured value of the pure water adjustment amount can reach the pure water adjustment amount command value w2 by time tM. In addition, at time tO, by changing the pure water adjustment amount command value from the pure water adjustment amount command value w3 to the pure water adjustment amount command value w2, the actually measured value of the pure water adjustment amount is caused to match with the pure water adjustment amount command value w2 at or after time t3. By the above adjustment, it is possible to maintain a more appropriate state in the vicinity of an electrolytic membrane as compared with the first comparative example described above.

FIG. 17 is a flowchart illustrating operation processing S600 of the sixth operation example of the current and the pure water adjustment amount according to the sixth embodiment. The processing of the flowchart illustrated in FIG. 17 is implemented in a controller 15 (see FIG. 1). In the description of the processing, FIG. 16 is appropriately referred to. In a state in which the active power command value is maintained from time t0, the time is monitored in step S601, and if time t is before time t1 (step S601: No), the processing proceeds to step S602. In step S602, the current command value is maintained at the current command value c1 according to the maintained active power command value, and the processing proceeds to step S603. In step S603, the pure water adjustment amount command value is maintained at the pure water adjustment amount command value w1 according to the maintained active power command value. In step S601, in a case where time t is time t1 or after time t1 (step S601: Yes), the processing proceeds to step S604. In step S604, the pure water adjustment amount command value is changed from the pure water adjustment amount command value w1 to the pure water adjustment amount command value w3, and the processing proceeds to step S605. In step S605, the time is monitored, and if time t is before time tN (step S605: No), the processing returns to step S604. In a case where it is determined in step 605 that time t is time tN or after time tN (step S605: Yes), the processing proceeds to step S606. In step 606, the current command value is changed from the current command value c1 to the current command value c2, and the processing proceeds to step 607. In step S607, it is monitored whether or not the current command value matches with the current command value c2, and in a case where the current command value does not match with the current command value c2 (step S607: No), the processing proceeds to step S608. In step S608, the time is monitored, and if time t is before time tO (step S608: No), the processing returns to step S606. In step S608, in a case where time t is time tO or after time tO (step S608: Yes), the processing proceeds to step S609. In step S609, the pure water adjustment amount command value is changed from the pure water adjustment amount command value w3 to the pure water adjustment amount command value w2, and the processing proceeds to step S606. In step S607, it is confirmed that the current command value matches with the current command value c2 (step S607: Yes), and then the processing proceeds to step S610. In step S610, after the current command value is maintained at the current command value c2, a series of operations ends.

### <<Operation-Mode Switching Operation Example>>

The first operation example of the first embodiment to the sixth operation example of the sixth embodiment have been described above. Here, it is assumed that an operation mode is changed from Comparative Example 1 and Comparative Example 2 to one of the first to sixth operation examples, and the selected one of the first to sixth operation examples is continued. Hereinafter, an operation example in which the operation mode including Comparative Example 1 and Comparative Example 2 is selected based on a state of the water electrolysis system 100 and the external information instead of continuing the operation mode of any one of the first to sixth operation examples will be described.

### <Seventh Embodiment>

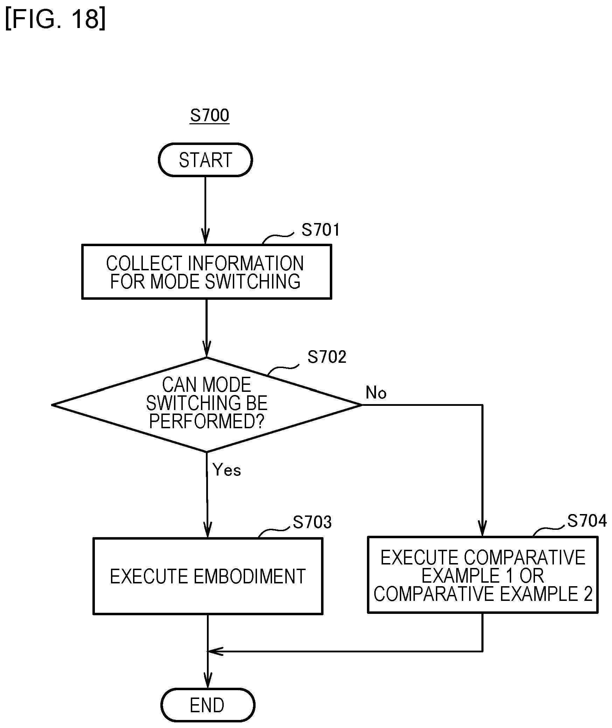

FIG. 18 is a flowchart illustrating operation processing S700 of an operation-mode switching operation example according to a seventh embodiment. In step S701, information collection for mode switching is performed. For example, the information may be whether or not a state of a component of a water electrolysis system 100 is abnormal, whether or not maintenance is performed, whether or not a mode switching command based on external information has been issued, or a change direction of an active power command value. After performing step S701, it is determined in step S702 whether or not the mode switching can be performed. In a case where the mode switching can be performed, the processing proceeds to step S703. In a case where the mode switching cannot be performed, the processing proceeds to step S704. In step S703, in response to the determination that the mode switching can be performed, any one of first to sixth operation examples of the embodiment is executed, and then a series of operations ends. In step S704, after an operation of Comparative Example 1 or Comparative Example 2 is executed, a series of operations ends.

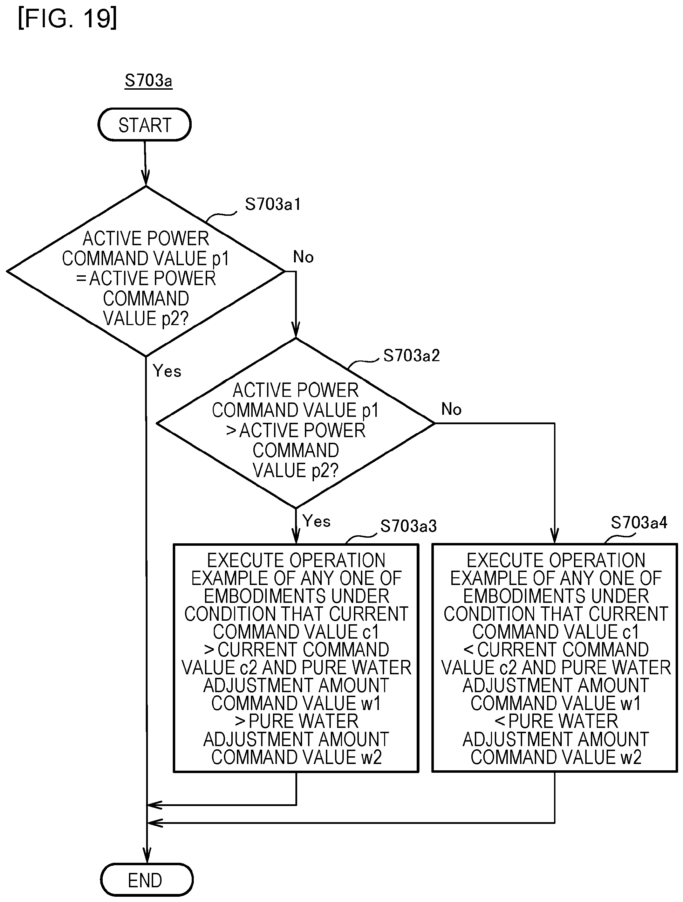

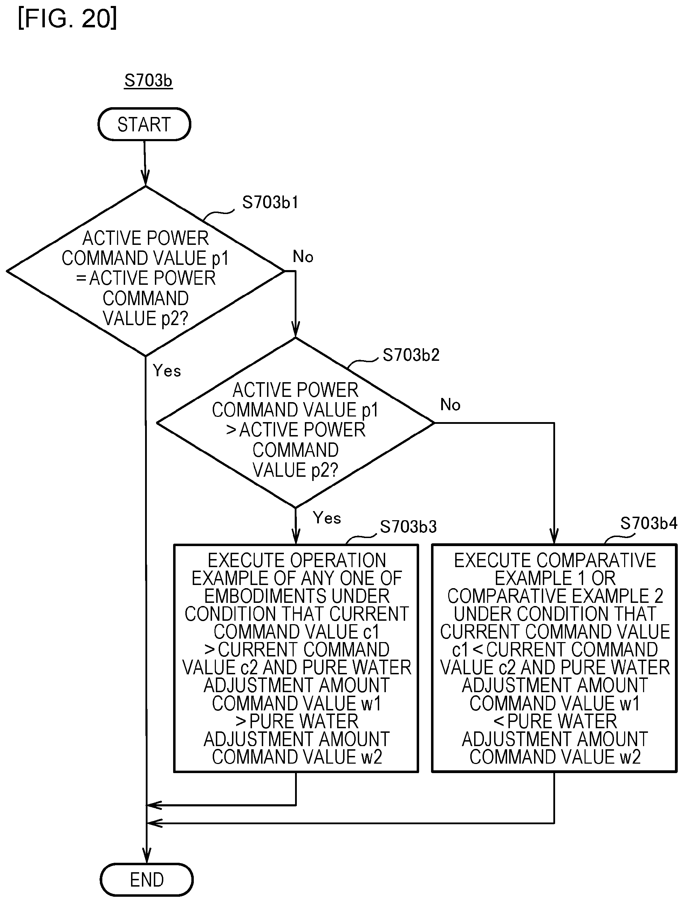

Hereinafter, a specific example of step S703 among the steps of the flowchart illustrated in FIG. 18 will be described with reference to FIGS. 19 and 20.

### <<First Operation Example in Operation-Mode Switching Operation Example>>

FIG. 19 is a flowchart illustrating operation processing S703a of the first operation example in the operation-mode switching operation example according to the seventh embodiment. In step S703a1, whether or not an active power command value is changed (whether or not an active power command value p1 and an active power command value p2 match with each other) is monitored. In a case where it is determined that the active power command value is changed (the active power command value p1 and the active power command value p2 do not match with each other) (step S703a1: No), the processing proceeds to step S703a2. In a case where it is determined that the active power command value is not changed (the active power command value p1 and the active power command value p2 match with each other) (step S703a1: Yes), a series of operations ends.

Here, the "first operation example" relates to switching of an operation mode, and is different from the first operation example (first embodiment) illustrated in FIG. 5 for a current and a pure water adjustment amount described above.

In step S703a2, the change direction of the active power command value is monitored. In a case where the active power command value p1 is larger than the active power command value p2 (step S703a2: Yes), the processing proceeds to step S703a3. In a case where the active power command value p1 is smaller than the active power command value p2 (step S703a2: No), the processing proceeds to step S703a4. In step S703a3, under a condition that a current command value c1 is set to be larger than a current command value c2 and a pure water adjustment amount command value w1 is set to be larger than a pure water adjustment amount command value w2, any one of the first to sixth operation examples described above is executed, and a series of operations ends.

In step S703a4, under a condition that the current command value c1 is set to be smaller than the current command value c2 and the pure water adjustment amount command value w1 is set to be smaller than the pure water adjustment amount command value w2, any one of the first to sixth operation examples described above is executed, and a series of operations ends. By performing the mode switching illustrated in FIG. 19, the first to sixth operation examples can be selected based on the change direction of the active power command value, and a state in the vicinity of an electrolytic membrane of an electrolysis stack group 11 can be adjusted to an appropriate state based on an operation state of the water electrolysis system 100.

### <<Second Operation Example in Operation-Mode Switching Operation Example>>

FIG. 20 is a flowchart illustrating operation processing S703b of the second operation example in the operation-mode switching operation example according to the seventh embodiment. In step S703b1, whether or not the active power command value is changed (whether or not the active power command value p1 and the active power command value p2 match with each other) is monitored. In a case where it is determined that the active power command value is changed (the active power command value p1 and the active power command value p2 do not match with each other) (step S703b1: No), the processing proceeds to step S703b2. In a case where it is determined that the active power command value is not changed (the active power command value p1 and the active power command value p2 match with each other) (step S703b1: Yes), a series of operations ends.

Here, the "second operation example" relates to switching of an operation mode, and is different from the second operation example (second embodiment) illustrated in FIG. 7 for the current and the pure water adjustment amount described above.

In step S703b2, the change direction of the active power command value is monitored. In a case where the active power command value p1 is larger than the active power command value p2 (step S703b2: Yes), the processing proceeds to step S703b3. In a case where the active power command value p1 is smaller than the active power command value p2 (step S703b2: No), the processing proceeds to step S703b4. In step S703b3, under a condition that the current command value c1 is set to be larger than the current command value c2 and the pure water adjustment amount command value w1 is set to be larger than the pure water adjustment amount command value w2, any one of the first to sixth operation examples described above is executed, and a series of operations ends.

In step S703b4, under a condition that the current command value c1 is set to be smaller than the current command value c2 and the pure water adjustment amount command value w1 is set to be smaller than the pure water adjustment amount command value w2, Comparative Example 1 or Comparative Example 2 described above is executed, and a series of operations ends. In particular, the second operation example illustrated in FIG. 20 is characterized in that the embodiment according to the present invention is executed when decreasing the active power command value, and Comparative Example 1 or Comparative Example 2 is executed when increasing the active power command value. By performing the mode switching illustrated in FIG. 20, the first to sixth operation examples and Comparative Example 1 or Comparative Example 2 are selected based on the change direction of the active power command value, and the state in the vicinity of the electrolytic membrane of the electrolysis stack group 11 can be adjusted to an appropriate state based on the operation state of the water electrolysis system 100.

A method of changing the active power command value, the current command value, and the pure water adjustment amount command value has been described for the first to sixth operation examples of the embodiment according to the present invention, but the present invention is not limited thereto. Although an example in which the active power command value, the current command value, and the pure water adjustment amount command value are changed in a ramp-like manner has been described, the active power command value, the current command value, and the pure water adjustment amount command value do not have to be changed in a linear manner, and may be changed such that slopes thereof are changed with time. In addition, the pure water adjustment amount command value does not have to be changed in a stepwise manner, but may be changed in a ramp-like manner or in a manner that a slope thereof changes. Any changing method may be used as long as a response speed difference between an actually measured value of the pure water adjustment amount and an actually measured value of the current is reduced without designating a change form of each command value.

As described above, the control method for the water electrolysis system of the present embodiment has the following features.
(1) The control method for the water electrolysis system including the power converter 12 that is configured to transmit and receive power between the AC-side connection end 12a and the DC-side connection end 12b by converting an alternating current and a direct current; the electrolysis stack (electrolysis stack group 11) that electrolyzes water to generate hydrogen and oxygen; the pure water adjustment device 13 that supplies water to the electrolysis stack and collects the hydrogen and the oxygen discharged from the electrolysis stack and the water that has not been used for electrolysis; and the control device (controller 15) that controls the power converter 12 and the pure water adjustment device 13 includes: a step of determining, by the control device, the current command value to be applied to the electrolysis stack; a step of determining, based on the current command value, the pure water adjustment amount command value for adjusting the pressure or/and the flow rate of the water to be supplied to the electrolysis stack; and a step of transmitting the current command value and the pure water adjustment amount command value to the power converter 12 and the pure water adjustment device 13, in which the control method includes the step A of causing the actually measured value of the pressure or/and the flow rate to reach the second pure water adjustment amount command value from the first pure water adjustment amount command value before the actually measured value of the current applied from the power converter 12 to the electrolysis stack reaches the second current command value from the first current command value when changing the current command value from the first current command value (current command value c1) to the second current command value (current command value c2) that is a different value and changing the pure water adjustment amount command value from the first pure water adjustment amount command value (pure water adjustment amount command value w1) to the second pure water adjustment amount command value (pure water adjustment amount command value w2) that is a different value (see FIGS. 5 and 6). With such a configuration, it is possible to reduce a response characteristic difference when adjusting the current of the electrolysis stack and the pressure or/and the flow rate of the water, and to bring the electrolysis state of the electrolysis stack into an appropriate state.
(2) In the control method for a water electrolysis system according to (1), the actually measured value of the pressure or/and the flow rate is changed so as to overshoot or undershoot during a period in which the actually measured value of the current is caused to reach the second current command value from the first current command value (see FIGS. 7, 8, 11, and 12).
(3) In the control method for a water electrolysis system according to (1), the actually measured value of the pressure or/and the flow rate is changed from the first pure water adjustment amount command value to the second pure water adjustment amount command value after the actually measured value of the current is changed from the first current command value to the second current command value when changing the current command value from the first current command value to the second current command value and changing the pure water adjustment amount command value from the first pure water adjustment amount command value to the second pure water adjustment amount command value (see FIGS. 9, 10, 11, and 12).
(4) In the control method for a water electrolysis system according to (1), the actually measured value of the pressure or/and the flow rate is changed from the first pure water adjustment amount command value to the second pure water adjustment amount command value before the actually measured value of the current is changed from the first current command value to the second current command value when changing the current command value from the first current command value to the second current command value and changing the pure water adjustment amount command value from the first pure water adjustment amount command value to the second pure water adjustment amount command value (see FIGS. 14 and 15).
(5) In the control method for a water electrolysis system according to (4), it is determined based on external information input from an outside of the water electrolysis system to the control device that the actually measured value of the pressure or/and the flow rate is changed from the first pure water adjustment amount command value to the second pure water adjustment amount command value before the actually measured value of the current is changed from the first current command value to the second current command value (see FIGS. 16 and 17).
(6) The control method for a water electrolysis system according to (1) includes: a step B of causing the actually measured value of the pressure or/and the flow rate to reach the second pure water adjustment amount command value from the first pure water adjustment amount command after the actually measured value of the current reaches the second current command value from the first current command value when changing the current command value from the first current command value to the second current command value and changing the pure water adjustment amount command value from the first pure water adjustment amount command value to the second pure water adjustment amount command value; a step of selecting any one of the step A and the step B according to external information and/or a state of the water electrolysis system; and a step of switching between the step A and the step B (see FIGS. 18, 19, and 20).
(7) In the control method for a water electrolysis system according to (6), the step A is not performed when an abnormality occurs or maintenance of the water electrolysis system is performed.

### Reference Signs List

3 switch
4 system (AC power system)
5 external device
6 peripheral equipment
6a power line
6b, 6c communication line
7 transformer
11 electrolysis stack group (electrolysis stacks)
12 power converter
12a AC-side connection end
12b DC-side connection end
13 pure water adjustment device
13a, 13b, 13c pipe
15 controller (control device)
100 water electrolysis system
131, 133 gas-liquid separator
132, 134 pressure adjustment valve
135, 136, 137 valve
138 pure water tank
139 water supply pump
S100, S200, S300, S400, S500, S600, S700, S700a, S700b operation processing
p1 active power command value
p2 active power command value
c1 current command value (first current command value)
c2 current command value (second current command value)
w1 pure water adjustment amount command value (first pure water adjustment amount command value)
w2 pure water adjustment amount command value (second pure water adjustment amount command value)
w3 pure water adjustment amount command value (third pure water adjustment amount command value)

## Claims

1. A control method for a water electrolysis system including a power converter that is configured to transmit and receive power between an alternating-current-side connection end and a direct-current-side connection end by converting an alternating current and a direct current, an electrolysis stack that electrolyzes water to generate hydrogen and oxygen, a pure water adjustment device that supplies water to the electrolysis stack and collects the hydrogen and the oxygen discharged from the electrolysis stack and the water that has not been used for electrolysis, and a control device that controls the power converter and the pure water adjustment device, the control method comprising:
a step of determining, by the control device, a current command value to be applied to the electrolysis stack;
a step of determining, based on the current command value, a pure water adjustment amount command value for adjusting a pressure or/and a flow rate of the water to be supplied to the electrolysis stack; and
a step of transmitting the current command value and the pure water adjustment amount command value to the power converter and the pure water adjustment device,
wherein the control method comprises a step A of causing an actually measured value of the pressure or/and the flow rate to reach a second pure water adjustment amount command value from a first pure water adjustment amount command value before an actually measured value of a current applied from the power converter to the electrolysis stack reaches a second current command value from a first current command value
when changing the current command value from the first current command value to the second current command value that is a different value and changing the pure water adjustment amount command value from the first pure water adjustment amount command value to the second pure water adjustment amount command value that is a different value.

2. The control method for a water electrolysis system according to claim 1, wherein
the actually measured value of the pressure or/and the flow rate is changed so as to overshoot or undershoot during a period in which the actually measured value of the current is caused to reach the second current command value from the first current command value.

3. The control method for a water electrolysis system according to claim 1, wherein
the actually measured value of the pressure or/and the flow rate is changed from the first pure water adjustment amount command value to the second pure water adjustment amount command value after the actually measured value of the current is changed from the first current command value to the second current command value
when changing the current command value from the first current command value to the second current command value and changing the pure water adjustment amount command value from the first pure water adjustment amount command value to the second pure water adjustment amount command value.

4. The control method for a water electrolysis system according to claim 1, wherein
the actually measured value of the pressure or/and the flow rate is changed from the first pure water adjustment amount command value to the second pure water adjustment amount command value before the actually measured value of the current is changed from the first current command value to the second current command value
when changing the current command value from the first current command value to the second current command value and changing the pure water adjustment amount command value from the first pure water adjustment amount command value to the second pure water adjustment amount command value.

5. The control method for a water electrolysis system according to claim 4, wherein
it is determined based on external information input from an outside of the water electrolysis system to the control device that the actually measured value of the pressure or/and the flow rate is changed from the first pure water adjustment amount command value to the second pure water adjustment amount command value before the actually measured value of the current is changed from the first current command value to the second current command value.

6. The control method for a water electrolysis system according to claim 5, wherein
the external information is active power and/or reactive power required for the water electrolysis system.

7. The control method for a water electrolysis system according to claim 5, wherein
the external information is weather information.

8. The control method for a water electrolysis system according to claim 5, wherein
the external information is electric power market information.

9. The control method for a water electrolysis system according to claim 5, wherein
the external information is power information of equipment that supplies power and is installed around the water electrolysis system.

10. The control method for a water electrolysis system according to claim 5, wherein
the external information is load information of equipment that consumes power and is installed around the water electrolysis system.

11. The control method for a water electrolysis system according to claim 5, wherein
the external information is power information transmitted and received by equipment that stores power and is installed around the water electrolysis system.

12. The control method for a water electrolysis system according to claim 1, comprising:
a step B of causing the actually measured value of the pressure or/and the flow rate to reach the second pure water adjustment amount command value from the first pure water adjustment amount command value after the actually measured value of the current reaches the second current command value from the first current command value
when changing the current command value from the first current command value to the second current command value and changing the pure water adjustment amount command value from the first pure water adjustment amount command value to the second pure water adjustment amount command value;
a step of selecting any one of the step A and the step B according to external information and/or a state of the water electrolysis system; and
a step of switching between the step A and the step B.

13. The control method for a water electrolysis system according to claim 12, wherein
the step A is not performed when an abnormality occurs or maintenance of the water electrolysis system is performed.

14. A water electrolysis system comprising:
a power converter that is configured to transmit and receive power between an alternating-current-side connection end and a direct-current-side connection end by converting an alternating current and a direct current; an electrolysis stack that electrolyzes water to generate hydrogen and oxygen; a pure water adjustment device that supplies water to the electrolysis stack and collects the hydrogen and the oxygen discharged from the electrolysis stack and the water that has not been used for electrolysis; and a control device that controls the power converter and the pure water adjustment device,
wherein when determining a current command value to be applied to the electrolysis stack, determining, based on the current command value, a pure water adjustment amount command value for adjusting a pressure or/and a flow rate of the water to be supplied to the electrolysis stack, and transmitting the current command value and the pure water adjustment amount command value to the power converter and the pure water adjustment device, the control device
performs a step A of causing an actually measured value of the pressure or/and the flow rate to reach a second pure water adjustment amount command value from a first pure water adjustment amount command value before an actually measured value of a current applied from the power converter to the electrolysis stack reaches a second current command value from a first current command value
in a case of changing the current command value from the first current command value to the second current command value that is a different value and changing the pure water adjustment amount command value from the first pure water adjustment amount command value to the second pure water adjustment amount command value that is a different value.
